# EUROPÄISCHE PATENTSCHRIFT

(11) **EP 1 777 993 B1**
(45) Veröffentlichungstag und Bekanntmachung des Hinweises auf die Patenterteilung: **28.07.2010**
(21) Anmeldenummer: 06021926.8
(22) Anmeldetag: 19.10.2006
(51) Int. Cl.: H05B 6/80, B01J 3/04

(54) **Mikrowellenautoklav**
Microwave autoclave
Autoclave à micro-ondes

(30) Priorität: 21.10.2005 DE 102005050528
(43) Veröffentlichungstag der Anmeldung: 25.04.2007
(73) Patentinhaber: Deutsches Zentrum für Luft- und Raumfahrt e.V., 51147 Köln (DE); MASCHINENBAU SCHOLZ GMBH & CO. KG, 48653 Coesfeld (DE)
(72) Erfinder: Meyer, Matthias, 38114 Braunschweig (DE); Binder, Burkhard, 37079 Göttingen (DE); Graeber, Martin, 48653 Coesfeld (DE)
(74) Vertreter: Rehberg Hüppe + Partner

(56) Entgegenhaltungen:
- EP-A1- 0 286 817
- WO-A-87/07812
- WO-A1-03/053105
- US-A1- 2004 104 221

## Beschreibung

Die Erfindung bezieht sich auf einen Autoklav für die Druck- und Temperaturbehandlung von Objekten, insbesondere für die Herstellung von Faserverbundbauteilen, der die Merkmale des Oberbegriffs des Patentanspruchs 1 aufweist.

Es gibt eine Vielzahl von unterschiedlichen Objekten, bei denen es sinnvoll ist, eine Druck- und Temperaturbehandlung in einem Autoklav durchzuführen. Hierzu zählen unter anderem Lebensmittel, die in einem solchen Autoklav sterilisiert werden können, und Baustoffe, wie beispielsweise Kalksandstein, die in einem Autoklav ausgehärtet werden können. In der folgenden Beschreibung wird konkret auf ein weiteres Beispiel abgestellt, nämlich die Herstellung von insbesondere großen Faserverbundbauteilen aus faserverstärkten Kunststoffen, wie beispielsweise kohlenstofffaserverstärkten oder glasfaserverstärkten Kunststoffen. Solche großen Bauteile aus Faserverbundwerkstoffen werden zum Beispiel in der Luftfahrtindustrie als leichte und dennoch feste Bauteile für Flugzeuge hergestellt.

Die Erfindung bezieht sich konkret auf einen Industrieautoklav mit einem Außendurchmesser von mindestens 2 m und einem freien Innendurchmesser des Druckraums von mindestens 1,5 m sowie einer Länge von einigen Metern, der auch zur Druck- und Temperaturbehandlung sehr großer Objekte geeignet ist.

### STAND DER TECHNIK

Bekannte Autoklaven, die zur Herstellung von Faserverbundbauteilen verwendet werden, weisen eine in dem Druckbehälter für die Aufnahme der Objekte angeordnete Heißgasquelle als Heizquelle auf. Von dieser Heißgasquelle wird ein Strom heißen Gases durch den Druckraum geführt, um dessen Innenvolumen einschließlich der in ihm angeordneten zu behandelnden Objekte zu erwärmen. Zur Führung dieses Luftstroms sind bei den bekannten Heißluftautoklaven häufig Luftleitbleche und Umluftventilatoren in dem von dem Druckbehälter begrenzten Druckraum vorgesehen. Die Heißlufterwärmung der in dem Druckraum angeordneten Objekte ist nicht ohne Nachteile. Sie erfolgt ausschließlich über die von der Heißluft überströmten Oberflächen der Objekte, von denen aus die Wärmeenergie durch reine Wärmeleitung in das Volumen der Objekte gelangen muss. Aber auch die Oberflächen der Objekte werden beispielsweise durch Abschattungen und andere Ungleichmäßigkeiten bei der Anordnung der Oberflächen gegenüber der strömenden Heißluft nur ungleichmäßig erwärmt. Unterschiedlich weit von den Oberflächen der Objekte liegende Kernbereiche der Objekte werden auch bei gleichmäßiger Erwärmung der Oberflächen der Objekte unterschiedlich schnell erwärmt. Auch der grundsätzliche Wirkungsgrad bei der Wärmeübertragung auf überströmte Oberflächen durch Konvektion ist im Bereich der üblicherweise auftretenden laminaren Gasströmungen nur schlecht, da die Strömungsgeschwindigkeit des heißen Gases in seiner Grenzschicht an der überströmten Oberfläche gegen null geht, so dass diese Grenzschicht eine ungewollte Isolationsschicht um das jeweilige aufzuwärmende Objekt ausbildet. Hinzu kommt, dass die heiße Luft in dem Druckraum des Autoklavs nicht nur die eigentlich zu behandelnden Objekte, sondern auch den Autoklav selbst erwärmt. Selbst dann, wenn der Autoklav über eine gute Innenisolierung verfügt, wird die weit überwiegende Heizleistung bei einem bekannten Heißluftautoklav nicht für die Erwärmung der zu behandelnden Objekte, sondern für diejenige des Druckbehälters und des weiteren Inhalts des Druckbehälters, wie beispielsweise von Formwerkzeugen für die zu behandelnden Objekte aber auch der diese umgebenden Atmosphäre, aufgewandt.

Aus der DE 199 29 666 C2 sind ein Verfahren und ein Mikrowellensystem zur thermischen Prozessierung von aus Ausgangsmaterialien zusammengesetzten Formkörpern zur formbeständigen dreidimensionalen Kompositen bekannt. Dabei wird aus mindestens einer Mikrowellenquelle über eine zugehörige Auskoppeleinrichtung eine Mikrowelle in einem Prozessraum ausgekoppelt und auf einen zugehörigen wellenoptischen Spiegel gerichtet, an dem neben der Reflektion auf das Prozessvolumen eine Umverteilung der Amplitudenverteilung derart stattfindet, dass am Prozessvolumen eine plane Wellenfront zustande kommt, um dort homogene oder hinreichend homogene Feldverhältnisse zu schaffen. Auf diese Weise soll Mikrowellenstrahlung für die thermische Behandlung von Ausgangsmaterialien zur Herstellung von Faserverbundbauteilen ertüchtigt werden, indem Inhomogenitäten der Temperaturverteilung über große Objekte bei deren thermischer Behandlung unter Verwendung der Mikrowellenstrahlung vermieden werden. Eine praktische Anwendung findet das aus der DE 199 29 666 C2 bekannte Verfahren und das dort ebenfalls beschriebene Mikrowellensystem bislang nicht. Einer praktischen Umsetzung steht u. a. die nicht gegebene Verfügbarkeit geeigneter wellenoptischer Spiegel entgegen. Zudem macht die Prozessierung großer Objekte nach dem bekannten Verfahren unter Verwendung des bekannten Mikrowellensystems den Einsatz sehr leistungsstarker Mikrowellenquellen erforderlich. Weiterhin ist auch bei ideal homogenen Feldverhältnissen der eingestrahlten Mikrowellenstrahlung eine homogene Temperaturverteilung über die zu behandelnden Objekte aufgrund von unterschiedlichen Absorptionen, Reflexionen und Abschattungen der Mikrowellenstrahlung im Prozessvolumen und durch die zu behandelnden Objekte selbst nicht gewährleistet. Eine gleichzeitige Druckbehandlung neben der Temperaturbehandlung ist bei dem aus der DE 199 29 666 C2 bekannten Verfahren und in dem dort beschriebenen Mikrowellensystem nicht beabsichtigt.

Ein Autoklav für die Druck- und Temperaturbehandlung von Objekten mit den Merkmalen des Oberbegriffs des unabhängigen Patentanspruchs 1 ist aus der WO 03/053105 bekannt. Hier ist der Druckraum als Hohlraumresonator für die von außen eingekoppelten Mikrowellen vorgesehen. Entsprechend ist der Durchmesser des Druckraums genau auf die Frequenz der eingekoppelten Mikrowellen abzustimmen. Er kann keine beliebige Größe annehmen. Die Mikrowellen werden über zwei oder drei in Umfangsrichtung angeordnete Reihen von Mikrowellenantennen durch die druckfeste Wandung des Druckbehälters in den Druckraum eingekoppelt. Obwohl grundsätzlich vorgesehen ist, in größeren Systemen mehrere Mikrowellenquellen vorzusehen, bleibt deren tatsächliche Zahl, da sie auch in axialer Richtung gleich beabstandet sein sollen, klein. Zudem muss auch die Anordnung der Mikrowellenquellen daran angepasst sein, dass in dem Druckraum eine einzige stehende Mikrowelle ausgebildet werden soll. Um die einzelnen Mikrowellenantennen auszubilden, tritt jeweils ein Körper aus dielektrischem Material von quadratischem Querschnitt durch die druckfeste Wandung hindurch. Außerhalb des Druckbehälters wird auf jede dieser Mikrowellenantennen ein von dem jeweiligen Mikrowellengenerator kommender Mikrowellenhohlleiter von quadratischem Querschnitt aufgesteckt. Diese Anordnung weist keine Festigkeit im Bereich höherer Drücke auf, weil es schwierig ist, die Körper aus dielektrischem Material in der druckfesten Wandung druckdicht und druckfest zu verankern. Es erscheint wenig realistisch, dass in dem Druckbehälter eine stehende Mikrowelle mit Knoten an der druckfesten Wandung unabhängig von den in den Druckraum eingebrachten Objekten ausgebildet werden kann. Damit erscheint es unrealistisch, dass bei Auslegung des Druckraums als Hohlraumresoantor für die Mikrowelle tatsächlich eine homogene Verteilung der Mikrowellenintensität über den Druckraum erreicht wird.

### AUFGABE DER ERFINDUNG

Der Erfindung liegt die Aufgabe zugrunde, einen Autoklav für die Druck- und Temperaturbehandlung von großen Objekten, insbesondere für die Herstellung von Faserverbundbaueilen, aufzuzeigen, der eine homogenere Erwärmung von in dem Druckraum des Autoklavs angeordneten Objekten bei gleichzeitig geringerem Energieeinsatz als bisher ermöglicht.

### LÖSUNG

Erfindungsgemäß wird diese Aufgabe durch einen Autoklav mit den Merkmalen des unabhängigen Patentanspruchs 1 gelöst. Bevorzugte Ausführungsformen des neuen Autoklavs sind in den abhängigen Patentansprüchen 2 bis 13 beschrieben.

### BESCHREIBUNG DER ERFINDUNG

Bei dem neuen Autoklav weist die Heizquelle zum Erwärmen der in dem Druckraum angeordneten Objekte eine Vielzahl von Mikrowellenquellen auf. Aus diesem Grund wird der neue Autoklav hier auch als Mikrowellenautoklav bezeichnet. Der neue Mikrowellenautoklav kombiniert demnach die thermische Behandlung von Objekten unter Einsatz von Mikrowellenstrahlung zur Erwärmung der Objekte mit einer gleichzeitigen Druckbehandlung der Objekte. Hierbei wird die Mikrowellenstrahlung von den Mikrowellenquellen in den Druckraum eingekoppelt, um auf die dort angeordneten Objekte einzuwirken.

Damit in dem neuen Mikrowellenautoklav mit den Mikrowellenquellen eine gleichmäßige Temperaturverteilung über die in dem Druckraum angeordneten Objekten erreicht wird, sind mindestens vier Mikrowellenquellen pro Quadratmeter Fläche der druckfesten Wandung vorgesehen. Diese Zahlenangabe geht von einem Industrieautoklav mit einem Außendurchmesser von mindestens etwa 2 m und einem freien Innendurchmesser des Druckraums von mindestens etwa 1,5 m sowie einer Länge von einigen Metern aus Bei deutlich kleineren Mikrowellenautoklaven müsste die Anzahl der Mikrowellenquellen pro Quadratmeter Fläche der druckfesten Wandung tendenziell größer sein. Bevorzugt ist es ohnehin, wenn ihre Anzahl mindestens acht pro Quadratmeter beträgt. Dabei sind die Mikrowellenquellen möglichst gleichmäßig über die Fläche der druckfesten Wandung verteilt, wovon allerdings ein unterer Bereich des Mikrowellenautoklavs ausgeschlossen sein kann in dem Beschickungswagen für die zu behandelnden Objekte die eingekoppelte Mikrowellenstrahlung sowieso abschatten würden. Die Erzeugung einer einzigen stehenden Mikrowelle in dem Druckraum ist bei dem neuen Mikrowellenautoklav kein angestrebtes Ziel.

Da eine Vielzahl von Mikrowellenquellen über die Fläche der druckfesten Wandung des Druckbehälters gleichmäßig verteilt angeordnet ist, wobei zu berücksichtigen ist, dass diese druckfeste Wandung eines Autoklavs üblicherweise Zylindermantelform aufweist, ergibt sich bei den angegebenen Flächendichten der Mikrowellenquellen ein vergleichsweise homogenes Mikrowellenfeld in dem Druckraum des Mikrowellenautoklavs. Zur gezielten Generierung einer definierten anderen Intensitätsverteilung der Mikrowellenstrahlung, um beispielsweise bestimmte Objekte oder Bereiche von Objekten in dem Druckraum stärker mit Mikrowellenstrahlung zu beaufschlagen, was auch zum Erreichen einer letztlich homogenen Temperaturverteilung über diese Objekte nötig sein kann, ist es aber auch möglich, mit einzelnen der Mikrowellenquellen Mikrowellenstrahlung höherer oder konzentrierterer Leistung in den Druckraum einzukoppeln. Hierzu können Richtantennen, wie beispielsweise so genannte Hornstrahler, für die Mikrowellenstrahlung dieser Mikrowellenquellen verwendet werden.

Die pro Mikrowellenquelle in den Druckraum des neuen Mikrowellenautoklavs in Form von Mikrowellenstrahlung eingekoppelte Heizleistung liegt in der Größenordnung von 1 kW und damit bei mindestens 4, vorzugsweise bei mindestens 8 kW pro Quadratmeter Fläche der druckfesten Wandung. Die typische Heizleistung pro Quadratmeter Fläche der druckfesten Wandung bei einem bekannten Heißluftautoklav liegt hingegen bei etwa 20 kW pro Quadratmeter. Selbst wenn der neue Mikrowellenautoklav über eine zusätzliche Heißgasquelle verfügt, benötigt er diese Energiemenge auch dann nicht, wenn die in dem Druckraum angeordneten Objekte auf gleiche Temperaturen wie in einem Heißluftautoklav erhöht werden. Dies ist auf die direkte Einkopplung der Wärmeenergie in die in dem Druckraum befindlichen Objekte über die Mikrowellenstrahlung zurückzuführen.

Die Vielzahl von einzelnen Mikrowellenquellen erlaubt es, bei dem neuen Mikrowellenautoklav mit als Standardkomponenten verfügbaren Mikrowellenquellen kleiner bis mittlerer Leistung auch dann auszukommen, wenn die Heizleistung der Heizquelle zumindest im überwiegenden Teil durch Mikrowellenstrahlung bereitgestellt wird. Sie ermöglicht es zugleich, eine homogene oder auch eine willkürlich anders definierte Intensitätsverteilung der Mikrowellen in dem Druckraum durch eine entsprechende Anordnung der Mikrowellenquellen zu erreichen. Um die Vielzahl der Mikrowellenquellen vorzusehen, ohne den Druckraum des neuen Mikrowellenautoklavs in seinem nutzbaren Volumen stark zu verkleinern, sind die Mikrowellenquellen der Heizquelle außerhalb des Druckbehälters angeordnet, wobei die von ihnen abgestrahlte Mikrowellenstrahlung durch die druckfeste Wandung hindurch in den Druckbehälter eingekoppelt wird. Hiermit ist der weitere Vorteil verbunden, dass die Mikrowellenquellen selbst weder dem in dem Mikrowellenautoklav herrschenden Druck noch der in seinem Druckraum vorliegenden erhöhten Temperatur ausgesetzt werden. Damit kann auf herkömmliche Mikrowellenquellen, wie sie als elektronische Standardkomponenten verfügbar sind, zurückgegriffen werden.

Nicht nur im Fall der Nachrüstung eines vorhandenen Autoklaven mit Mikrowellenquellen, sondern auch bei Ausführungsformen des erfindungsgemäßen Mikrowellenautoklavs, die neu aufgebaut werden, kann die Heizquelle neben den Mikrowellenquellen auch eine Heißgasquelle oder zumindest eine Umwälzeinrichtung für das Gas in dem Druckraum des Mikrowellenautoklavs aufweisen. Die Umwälzung des Gases, das selbst nicht mit der Mikrowellenstrahlung erwärmt werden kann, und für das deshalb sinnvoller Weise eine andere Heizquelle vorgesehen ist, führt zu einer Vergleichmäßigung der Erwärmung der in dem Druckraum angeordneten Objekte durch die Mikrowellenstrahlung.

Grundsätzlich kann die Heizquelle des neuen Mikrowellenautklavs auch nur Mikrowellenquellen aufweisen. Wenn die Heizquelle jedoch neben den Mikrowellenquellen auch eine Heißgasquelle aufweist, kann ein Druckaufbau in dem Druckraum durch Temperaturerhöhung des in dem Druckraum eingeschlossenen Gases mit der Heißgasquelle erfolgt. Dies ist deutlich effektiver als eine Temperaturerhöhung des in dem Druckraum eingeschlossenen Gases mit Mikrowellenstrahlung.

Die bei dem neuen Mikrowellenautoklav eingesetzten Mikrowellenquellen sind vorzugsweise kostengünstig verfügbare elektronische Standardkomponenten, z. B. in Form so genannter Magnetrons, die mit einer Mikrowellenleistung von bis zu 30 kW erhältlich sind.

Typische bekannte und als Standardkomponenten verfügbare Mikrowellenquellen strahlen Mikrowellen mit einer Frequenz im Bereich von 30 MHz bis 30 GHz ab; typische Frequenzen liegen bei von 0,913, 2,45 und 5,8 GHz. Bei der vorliegenden Erfindung sind insbesondere Mikrowellenquellen, die Mikrowellen mit einer Frequenz von 2,45 GHz abstrahlen, bevorzugt. Magnetrons mit einer derartigen Ausgangsfrequenz stellen nach derzeitigem Stand ein Optimum an kostengünstig verfügbarer Mikrowellenleistung und Einkopplung dieser in die Matrix von Faserverbundwerkstoffen dar.

Für das Einkoppeln der Mikrowellenstrahlung durch die druckfeste Wandung des Mikrowellenautoklavs hindurch können Mikrowellenleiter vorgesehen sein, die durch die druckfeste Wandung hindurchführen, wobei die Mikrowellenstrahlung an dem außerhalb des Druckbehälters liegenden einen Ende des jeweiligen Mikrowellenleiters in den Hohlleiter eingekoppelt werden und an dem anderen, in dem Druckraum endenden Ende des Mikrowellenleiters aus diesem in den Druckraum austreten. Geeignete Mikrowellenleiter können als Hohlleiter aufgebaut sein. Besonders als Mikrowellenleiter geeignet sind aber Koaxialleitungen, deren inneres Leitungselement von einer Mikrowellenantenne gebildet wird, die von einem durch die druckfeste Wandung des Druckbehälters führenden Rohr aufgenommen wird. Dieses Rohr bildet das äußere Leitungselement der Koaxialleitung. Wenn das Rohr an seinem innerhalb des Druckraums befindlichen Ende durch eine druckfeste, mikrowellendurchlässige Kappe verschlossen ist, befindet sich die Mikrowellenantenne außerhalb des Druckraums des Mikrowellenautoklavs. Eine für den druckdichten aber mikrowellendurchlässigen Abschluss des Rohrs geeignete Kappe kann beispielsweise aus Aluminiumoxid, Quarzglas oder Kalziumkarbonat ausgebildet sein, das auch eine gute Temperaturbeständigkeit in Bezug auf ihre hier relevanten Eigenschaften aufweisen. Wenn die Temperaturbeanspruchung nicht sehr hoch ist, können auch andere Materialien, wie PTFE, PEEK oder PP, die weniger stoßempfindlich als die zuvor genannten Materialien sind, für die Kappe eingesetzt werden. Alternativ kann eine ebenfalls mikrowellendurchlässige schlagzähe Schutzkappe, beispielsweise aus den zuletzt genannten Kunststoffmaterialien, auf der Kappe aus einem stoßempfindlichen aber temperaturfesten Material angeordnet sein, um diese vor dem direkten Anstoßen von Objekten, die beispielsweise auf einem Bestückungswagen durch den Mikrowellenautoklav hindurch geschoben werden, zu vermeiden. Zwischen der druckdichten Kappe und dem Rohr kann eine separate Druckdichtung angeordnet werden. Zusätzlich kann die Kappe durch eine Überwurfmutter auf dem freien Ende des Rohrs gesichert sein.

In einer konkreten Ausführungsform des neuen Mikrowellenautoklavs führen die Mikrowellenleiter für das Einkoppeln der Mikrowellenstrahlung in den Druckraum durch am Innenumfang des Druckbehälters angeordnete Luftleit- und/oder Mikrowellenreflektorbleche hindurch. Diese Bleche können wie die druckfeste Wandung von üblichen Autoklaven zylindermantelförmig geformt sein. Es ist aber auch möglich, sie aus ebenen Abschnitten zusammenzusetzen, wenn hierdurch die Homogenität der Mikrowellenverteilung in dem Druckraum aufgrund von an den Blechen reflektierten Anteilen der Mikrowellenstrahlung gefördert werden kann. Zudem kann hinter den Blechen eine Rückströmung von Gas erfolgen, das axial durch den Druckraum hindurchgefördert wird, um die Temperaturverteilung in dem Druckraum zu homogenisieren. Wenn die Mikrowellenstrahlung von den Blechen reflektiert wird und so nur zu geringeren Anteilen auf die Innenseite der druckfesten Wandung fällt, wird eine an der Innenseite der Wandung angeordnete Isolierung weniger stark unnötig durch die Mikrowellenstrahlung aufgeheizt. Eine derartige thermische Isolierung ist auch bei dem neuen Mikrowellenautoklav sinnvoll.

Die Luftleit- und/oder Mikrowellenreflektorbleche können direkt an den Rohren für die Aufnahme der Hohlleiter für das Einkoppeln der Mikrowellenstrahlung in den Druckraum des Mikrowellenautoklavs gelagert sein, so dass diese Rohre eine Doppelfunktion erfüllen.

Der beschriebene Aufbau der durch die druckfeste Wandung hindurchführenden Mikrowellenleiter erlaubt es problemlos, den Mikrowellenautoklaven für eine Dauerbelastung von 15 bar, entsprechend einem Prüfdruck von 22,5 bar auszulegen. Dabei kann gleichzeitig eine Temperatur in dem Druckraum von 250 °C vorliegen.

Der Druckraum in dem Duckbehälter des neuen Mikrowellenautoklavs kann durch luftdurchlässige elektromagnetische Abschirmungen in einzelne Mikrowellenzonen unterteilt sein. Eine derartige elektromagnetische Abschirmung lässt die Mikrowellenstrahlung nicht von der einen in die andere benachbarte Mikrowellenzone übertreten. So können mit der Mikrowellenstrahlung unterschiedliche Temperaturen der Objekte in den einzenen Mikrowellenzonen eingestellt werden. Die Luftdurchlässigkeit der Abschirmungen ermöglicht es dennoch, eine Luftströmung durch den Mikrowellenautoklav, wie sie allein zur Abkühlung der in ihm angeordneten Objekte nach der erfolgten thermischen Behandlung nötig ist, über die gesamte Länge des Mikrowellenautoklavs hervorzurufen.

Durch die typische Ausbildung der druckfesten Wandung des Druckbehälters eines Autoklavs aus Metall weist der neue Mikrowellenautoklav einen Metallmantel mit guter Leitfähigkeit auf, die ein Austreten von Mikrowellenstrahlung aus dem Autoklav verhindert.

Die Wirkung der Mikrowellenstrahlung innerhalb des Druckraums des Mikrowellenautoklavs kann beispielsweise mit einer Wärmebildkamera oder einem Pyrometer, aber auch mit einzelnen lokalen Wärmesensoren beobachtet werden. Dies kann dazu genutzt werden, um die Temperaturverteilung durch gezieltes Zu- oder Abschalten bzw. eine Leistungsregelung einzelner Mikrowellenquellen zu optimieren.

Es versteht sich, dass auch bei den Objekten, die in dem neuen Mikrowellenautoklav eingebracht werden, überprüft werden muss, ob diese für die Einwirkung von Mikrowellenstrahlung geeignet sind. Falls dies nicht der Fall ist, müssen entsprechende Anpassungen vorgenommen werden. Grundsätzlich, und nicht nur bei einem Mikrowellenautoklav, ist es günstig, wenn eingesetzte Formwerkzeuge eine geringe Wärmekapazität aufweisen, um die Verlustwärme in dem Autoklav zu minimieren.

Mikrowellenreflektierende Werkzeuge können eingesetzt werden, wenn die Mikrowellen z.B. durch einen mikrowellentransparenten Vakuumsack das jeweils auf dem Werkzeug angeordnete Objekt erreichen. Gerade bei höheren Füllungsgraden des Druckraums des neuen Mikrowellenautoklavs ist häufig jedoch der Einsatz von insgesamt mikrowellentransparenten Werkzeugen sinnvoll. Diese erlauben es auch, ein Objekt, das vollständig in ein Formwerkzeug eingeschlossen ist, mit Mikrowellenstrahlung zu erreichen, und zwar von allen Seiten. Durch gezielte Auslegung eines Werkzeugs mit konstanten oder neutralen dielektrischen Eigenschaften wird die Gefahr eines Auftretens lokaler Überhitzungen vermieden.

Auch eine thermische Isolation des jeweiligen Objekts auf dem Werkzeug ist möglich, um thermische Verluste aus dem Objekt heraus zu verringern. Zur Erwärmung von schlecht direkt an Mikrowellenstrahlung ankoppelnden Werkstoffen können Werkzeuge aus Materialien ausgebildet werden, die ihrerseits sehr gut an Mikrowellenstrahlung ankoppeln und so dass jeweilige Objekt indirekt erwärmen.

In einer Mikrowellenstrahlungsumgebung einsetzbare Messtechniken zur Erfassung der Temperatur von Objekten in dem Druckraum des neuen Mikrowellenautoklavs umfassen ummantelte Thermoelemente, faseroptische Thermoelemente, Lichtwellenleiter zur ortsabhängigen Temperaturmessung, Thermokameras, Thermoscanner und Pyrometer. Die optischen Messtechniken können Sensoren außerhalb des Mikrowellenfelds aufweisen. Es ist ausreichend, wenn die optische Messeinrichtung das Objekt von außerhalb des Mikrowellenfelds erfassen kann. Jedwede Messelemente müssen jedoch an dem jeweiligen Objekt selbst angebracht werden und sind vor der Mikrowellenstrahlung gegebenenfalls durch geschirmte Leitungen zu schützen.

Bei allen Prozessen, bei denen Leitungen zu dem jeweiligen Objekt geführt werden, wie beispielsweise Injektionsleitungen und Vakuumleitungen, sind die Injektionsleitungen aus mikrowellenreflektierenden Werkstoffen auszulegen. Das Harz in den Injektionsleitungen ist vor der direkten Bestrahlung mit Mikrowellen zu schützen, um eine ungewollte Erwärmung und damit einhergehende Aushärtung zu vermeiden. Vakuumleitungen sind aus Sicherheitsgründen ebenfalls aus mikrowellenreflektierenden Werkstoffen auszulegen, um unnötige Plasmabildung in den Vakuumleitungen zu vermeiden. Dies ist jedoch nicht zwingend erforderlich.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Die Erfindung wird im Folgenden anhand eines konkreten Ausführungsbeispiels näher erläutert und beschrieben.
- **Fig. 1**: zeigt einen Längsschnitt durch das vordere Segment eines Mikrowellenautoklavs.
- **Fig. 2**: zeigt einen Querschnitt durch den Mikrowellenautoklav gemäß Fig. 1.
- **Fig. 3**: zeigt ein Detail des Querschnitts gemäß Fig. 2 mit einem zusätzlichen Luftleit- und Mikrowellenreflektionsblech.
- **Fig. 4**: zeigt ein Ende eines Rohrs für das Einkoppeln von Mikrowellenstrahlung in den Mikrowellenautoklav gemäß den Fig. 1 und 2.
- **Fig. 5**: zeigt eine Mikrowellenquelle zum Einkoppeln von Mikrowellenstrahlung in den Mikrowellenautoklav über das Rohr, dessen eines Ende in Fig. 4 wiedergegeben ist.

### FIGURENBESCHREIBUNG

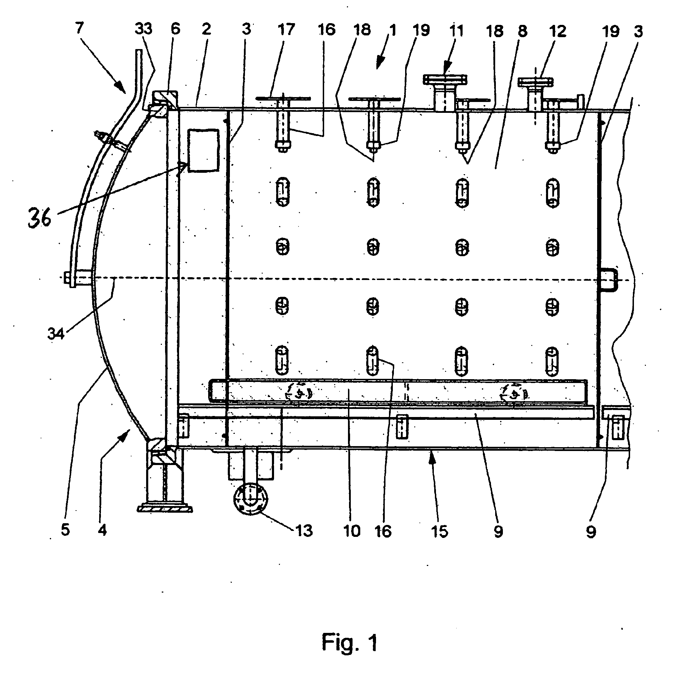

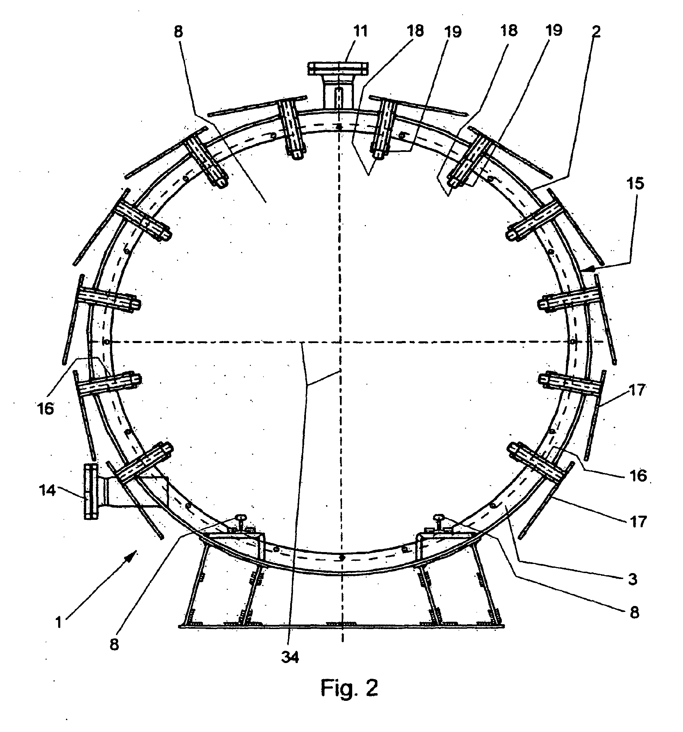

Der in den **Fig. 1** **und** **2** gezeigte Mikrowellenautoklav 1 weist einen Druckbehälter 15 mit einer zylindermantelförmigen druckfesten Wandung 2 auf. An dem in Fig. 1 gezeigten Ende 4 des Mikrowellenautoklavs 1 ist ein druckfester Deckel 5 vorgesehen, der im geöffneten Zustand den gesamten Querschnitt des Mikrowellenautoklavs gemäß Fig. 2 freigibt, da sich ein Behälterring 6 über die an ihn angeschweißte Wandung 2 radial nur nach außen hinaus erstreckt. An dem Behälterring 6 sind Wülste ausgebildet, hinter die beim Schließen des Deckels 5 durch Verdrehen um eine Längsachse 34 des Druckbehälters Lappen an einem Deckelring 33 des Deckel 5 greifen. So ist ein Schnellverschluss zwischen dem an einem Deckelscharnier 7 aufschwenkbaren Deckel und dem Behältering ausgebildet ist, der bei drucklosem Mikrowellenautoklav 1 eine schnelle Öffnung und Freigabe des von dem Druckbehälter 15 umschlossenen Druckraums 8 ermöglicht. Für eine Beschickung des Druckraums 8 mit Objekten, die darin druck- und temperaturbehandelt werden sollen, verlaufen Schienen 9 am Grund des Druckraums 8, auf denen Bestückungswagen 10 mit den jeweiligen Objekten in den Druckraum 8 eingeschoben werden können. Konkret kann eine Vielzahl von Bestückungswagen 10 hintereinander in den Druckraum 8 eingebracht werden, da dieser typischerweise ein Vielfaches der in Fig. 1 wiedergegebenen Länge aufweist. Zur Unterteilung des Druckraums in Richtung der Längsachse 34 in einzelne Mikrowellenzonen sind Befestigungsringe 3 für hier nicht dargestellte Schirmbleche oder dergleichen vorgesehen. Anschlüsse 11 bis 14 an den Druckbehälter 15, die durch die Wandung 2 führen, sind aus verschiedenen Gründen vorgesehen. Konkrete Verwendungsmöglichkeiten der Anschlüsse 11 bis 14 und auch weiterer Anschlüsse bestehen darin, Zufuhrleitungen zu Objekten innerhalb des Druckraums 8, wie beispielsweise Harzinjektionsleitungen für die Herstellung von Faserverbundwerkstoffen oder elektrische Steuer- und Signalleitungen, durch die Wandung 2 hindurchzuführen oder Wärmebildkameras und/oder andere Messgeräte zur Beobachtung der innerhalb des Druckraums 8 angeordneten Objekte anzubringen. Der Druckaufbau in dem Druckraum 8 des Mikrowellenautoklavs 1 erfolgt durch Temperaturerhöhung des in dem Druckraum 8 eingeschlossenen Gases mit einer hier nur sehr schematisch wiedergegebenen konventionellen Heißgasquelle 36 innerhalb des Druckraums 8. Allgemein liegt der angestrebte Innendruck in dem Druckraum 8 des Mikrowellenautoklavs bei mehr als 3 bar. Ein typischer Arbeitsbereich liegt bei 6 bis 7 bar, kann aber auch über 10 bar hinausgehen. Bis zu Drücken von 15 bar ist der Mikrowellenautoklav 1 für eine Dauerbelastung ausgelegt. Der Prüfdruck für den Mikrowellenautoklav 1 liegt entsprechend bei 22,5 bar. Für die Erwärmung der Objekte in dem Druckraum 8 ist bei dem Mikrowellenautoklav 1 neben der Heißgasquelle 36 eine Vielzahl von Mikrowellenquellen vorgesehen. In den Fig. 1 und 2 ist zwar keine dieser Mikrowellenquellen selbst wiedergegeben. Dargestellt sind jedoch Rohre 16 zur Aufnahme von Mikrowellenantennen, um Mikrowellenstrahlung von Mikrowellenquellen, die außerhalb der druckfesten Wandung 2 angeordnet sind, in den Druckraum 8 einzukoppeln. Die Rohre 16 verlaufen senkrecht durch die Wandung 12 und sind druckdicht mit dieser verschweißt. An den außerhalb des Druckraums 8 befindlichen Enden der Rohre 16 sind Montageplatten 17 angeschweißt, an denen die hier nicht dargestellten Mikrowellenquellen gelagert werden. Die in den Druckraum 8 mündenden Enden der Rohre 16 sind durch druckfeste und druckdichte sowie mikrowellendurchlässige Kappen 18 verschlossen, die auf den Rohren 16 durch Überwurfmuttern 19 gesichert sind. Hierauf wird im Zusammenhang mit den folgenden Figuren noch näher eingegangen werden. Ein Überdruck in dem Druckraum 8 des Mikrowellenautoklavs 1 erstreckt sich somit nicht bis in die Rohre 16 hinein, sondern wird von deren Inneren durch die Kappen 18 abgeschirmt. Die Vielzahl der Rohre 15 ermöglicht es, Mikrowellenstrahlung von einer Vielzahl von Mikrowellenquellen in den Druckraum 8 einzukoppeln. Durch die gleichmäßige Verteilung der Rohre 15 über die Wandung 2 bis auf den unteren Bereich des Mikrowellenautoklavs 1, wo der Bestückungswagen 10 gemäß Fig. 1 die Mikrowellenstrahlung von dem Druckraum 8 abschirmen würde, kann in dem Druckraum 8 entweder eine homogene Verteilung der Mikrowellenstrahlung erzielt werden, oder aber auch eine gezielte Konzentration auf frei wählbare Bereiche des Druckraums 8. Von jedem in den Druckraum 8 einmündenden Ende eines Rohrs 16 breitet sich eine an seinem anderen Ende eingekoppelte Mikrowellenstrahlung keulenförmig in den Druckraum 8 hinein aus. Die Überlagerung derartiger Intensitätsverteilungen einer Vielzahl von Mikrowellenquellen, wobei zusätzlich die Intensität jeder einzelnen Mikrowellenquelle geregelt werden kann, erlaubt es, nahezu jede gewünschte Intensitätsverteilung der Mikrowellenstrahlung in dem Druckraum 8 auszubilden.

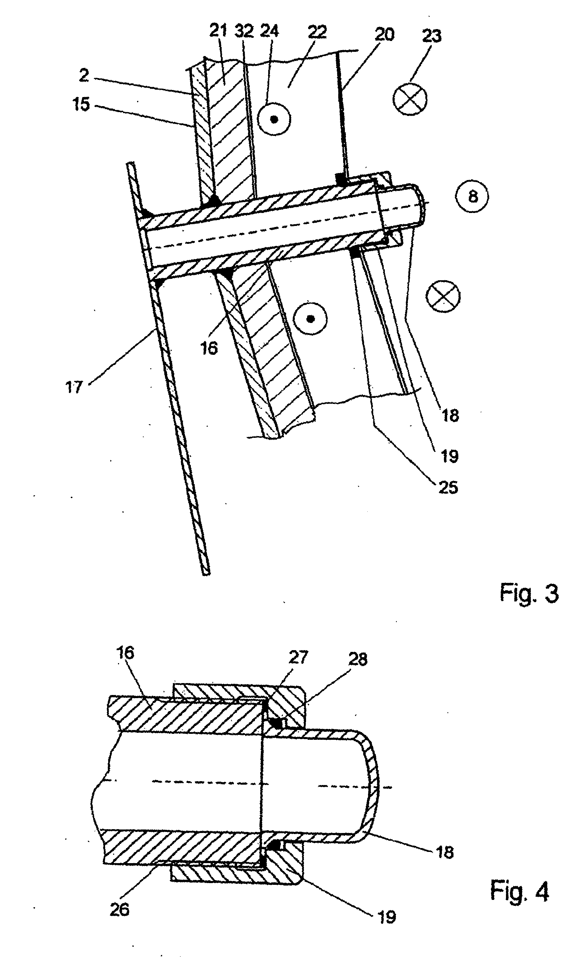

**Fig. 3** zeigt in vergrößerter Darstellung ein sich durch die druckfeste Wandung 2 erstreckendes Rohr 16, an dessen außerhalb des Druckraums 8 liegenden Ende eine Montageplatte 17 für eine auch hier nicht wiedergegebene Mikrowellenquelle befestigt ist. Zusätzlich zu den Darstellungen gemäß den Fig. 1 und 2 zeigt Fig. 3 ein Luftleit- und Mikrowellenreflektionsblech 20 und eine Isolierung 21. Die Isolierung 21 verläuft innen an der Wandung 2 und bewirkt eine thermische Isolierung des Druckraums 8 nach außen. Sie wird durch ein Isolationsblech 32 zu dem Druckraum 8 hin abgeschlossen. Das Luftleit- und Mikrowellenreflektionsblech 20 begrenzt den Teil des Druckraums 8, in dem sich die Mikrowellen ausbreiten sollen. Durch die Reflektion der Mikrowellen an dem Blech 20 wird zudem die Intensitätsverteilung der Mikrowellen in dem Druckraum 8 gezielt beeinflusst. Weiterhin teilt das Blech 20 von dem Druckraum 8 einen Randbereich ab, der als Rückströmkanal 22 für eine in Fig. 3 durch Richtungssymbole 23 und 24 angedeutete Umluftströmung durch den Druckraum 8 dient. Diese Umluftströmung wird durch eine Gebläseeinrichtung innerhalb des Druckraums 8 hervorgerufen, die hier nicht wiedergegeben ist und beispielsweise an dem dem Deckel 5 gemäß Fig. 1 gegenüberliegenden Ende des Druckbehälters 15 angeordnet sein könnte. Das Blech 20 ist hier an dem Rohr 16 befestigt und ist darauf zwischen einem auf dem Rohr 16 festgelegten Bund 25 und der Überwurfmutter 19 festgeklemmt.

**Fig. 4** zeigt die Befestigung der Kappe 18 auf dem Ende des Rohrs 16, das eine Mikrowellenantenne zum Einkoppeln von Mikrowellenstrahlung in den Druckraum 8 aufnehmen kann. Dabei sind der Bund 25 und das Blech 20 gemäß Fig. 3 nicht wiedergegeben. Die Kappe 18 ist aus Aluminiumoxid ausgebildet, das bei einer Temperatur von etwa 180 °C, für die der Mikrowellenautoklav 1 gemäß den Fig. 1 und 2 typischerweise vorgesehen ist, und auch darüber hinaus bis etwa 800 °C druckfest ist. Andere druck- und temperaturfeste Materialien, wie beispielsweise Quarzglas oder Kalziumkarbonat, können ebenfalls eingesetzt werden, wenn sie wie Aluminiumoxid die in das Rohr 16 eingekoppelte Mikrowellenstrahlung in den Druckraum 8 gemäß den Fig. 1 bis 3 austreten lassen. Die Kappe 18 wird durch die Überwurfmutter 19 auf dem Rohr 16 gehalten, wobei die Überwurfmutter 19 in ein Außengewinde 26 eingreift, das in das Rohr 16 geschnitten ist. Zwei Dichtungen 27 und 28 sind dabei zwischen der Kappe 18 und der Überwurfmutter 19 bzw. der Überwurfmutter 19 und dem Rohr 16 vorgesehen. Durch diese Folge der Dichtungen kann sich die Kappe 18 starr und ohne Luftspalt an dem Rohr 16 abstützen. Die eine Dichtung 27 wird zwischen der Überwurfmutter 19 und dem Rohr 16 axial zusammengedrückt. Die andere Dichtung 28 wird durch die Druckdifferenz zwischen dem Druckraum 8 und dem Inneren des Rohrs 16 in den sich verjüngenden Spalt zwischen der Kappe 18 und der Überwurfmutter 19 eingepresst.

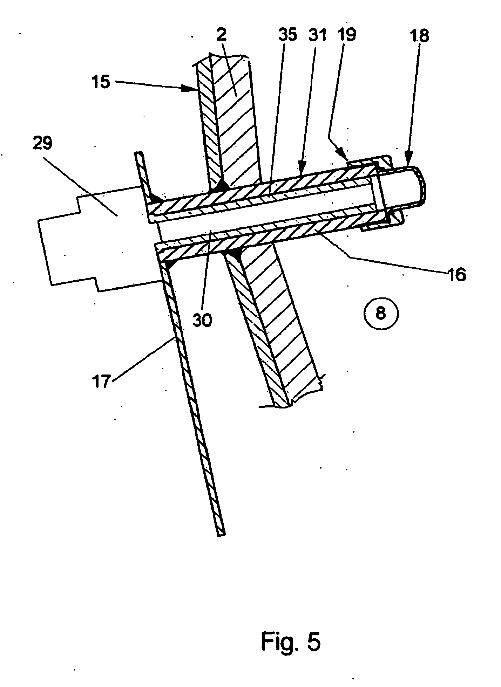

**Fig. 5** zeigt die Anordnung einer Mikrowellenquelle 29 auf einer der Montageplatten 17. Eine Mikrowellenantenne 30 der als Magnetron ausgebildeten Mikrowellenquelle 29 ragt von außen in das Rohr 16 hinein und endet erst kurz vor dem Ende des Rohrs 16 in dem Druckraum 8. Durch die koaxiale Anordnung der Mikrowellenantenne in dem Rohr 16 wird eine Koaxialleitung 31 für die mit der Mikrowellenquelle erzeugte Mikrowellenstrahlung ausgebildet. Dabei kann in einem zwischen dem Hohlleiter 30 und dem Rohr 16 verbleibenden Ringraum 35 ein Dielektrikum zur Stabilisierung der Koaxialleitung 31 vorgesehen sein. Die von der Koaxialleitung durch die Wandung 2 geführte Mikrowellenstrahlung wird durch die Kappe 18 hindurch in den Druckraum 8 des Mikrowellenautoklavs abgestrahlt.

### BEZUGSZEICHENLISTE

- 1: Mikrowellenautoklav
- 2: druckfeste Wandung
- 3: Befestigungsring
- 4: Ende
- 5: Deckel
- 6: Behälterring
- 7: Deckelscharnier
- 8: Druckraum
- 9: Schiene
- 10: Bestückungswagen
- 11: Anschluss
- 12: Anschluss
- 13: Anschluss
- 14: Anschluss
- 15: Druckbehälter
- 16: Rohr
- 17: Montageplatte
- 18: Kappe
- 19: Überwurfmutter
- 20: Blech
- 21: Isolierung
- 22: Rückströmkanal
- 23: Richtungssymbol
- 24: Richtungssymbol
- 25: Bund
- 26: Außengewinde
- 27: Dichtung
- 28: Dichtung
- 29: Mikrowellenquelle
- 30: Mikrowellenantenne
- 31: Koaxialleitung
- 32: Isolationsblech
- 33: Deckelring
- 34: Längsachse
- 35: Ringraum
- 36: Heißgasquelle

## Patentansprüche

1. Autoklav für die Druck- und Temperaturbehandlung von Objekten, insbesondere für die Herstellung von Faserverbundbauteilen, mit einem einen Druckraum zur Aufnahme der Objekte umschließenden, eine druckfeste Wandung aufweisenden Druckbehälter und wobei mit einer Heizquelle zur Erwärmung der in dem Druckraum angeordneten Objekte, ein freier Innendurchmesser des Druckraums mindestens 1,5 m beträgt und wobei die Heizquelle eine Vielzahl von außerhalb des Druckbehälters angeordneten Mikrowellenquellen aufweist, die über die Fläche der druckfesten Wandung des Druckbehälters verteilt angeordnet sind, wobei von den Mikrowellenquellen abgestrahlte Mikrowellenstrahlung durch die druckfeste Wandung hindurch in den Druckraum eingekoppelt wird, **dadurch gekennzeichnet, dass** eine Flächendichte der Mikrowellenquellen (29) über der druckfesten Wandung (2) größergleich 4/m² ist.

2. Autoklav nach Anspruch 1, **dadurch gekennzeichnet, dass** die Flächendichte der Mikrowellenquellen (29) über der druckfesten Wandung (2) größergleich 8/m² ist.

3. Autoklav nach einem der Ansprüche 1 und 2, **dadurch gekennzeichnet, dass** die Mikrowellenquellen (29), zumindest bis auf einen unteren Bereich des Mikrowellenautoklavs (1), gleichmäßig über die Fläche der druckfesten Wandung (2) verteilt sind.

4. Autoklav nach einem der Ansprüche 1 bis 3, **dadurch gekennzeichnet, dass** die Heizquelle neben den Mikrowellenquellen (29) eine Heißgasquelle aufweist, wobei ein Druckaufbau in dem Druckraum (8) durch Temperaturerhöhung des in dem Druckraum (8) eingeschlossenen Gases mit der Heißgasquelle erfolgt.

5. Autoklav nach einem der Ansprüche 1 bis 4, **dadurch gekennzeichnet, dass** die Heizquelle mindestens eine Mikrowellenquelle (29) in Form eines Magnetrons aufweist.

6. Autoklav nach einem der Ansprüche 1 bis 5, **dadurch gekennzeichnet, dass** die Heizquelle mindestens eine Mikrowellenquelle (29) aufweist, die Mikrowellenstrahlung einer Frequenz von 30 MHz bis 30 GHz, insbesondere von 0,913, 2,45 oder 5,8 GHz, abstrahlt.

7. Autoklav nach einem der Ansprüche 1 bis 6, **dadurch gekennzeichnet, dass** von jeder außerhalb des Druckbehälters (15) angeordneten Mikrowellenquelle (29) abgestrahlte Mikrowellenstrahlung in eine durch die druckfeste Wandung (2) hindurchführende Koaxialleitung (31) eingekoppelt wird.

8. Autoklav nach Anspruch 7, **dadurch gekennzeichnet, dass** das äußere Leitungselement der Koaxialleitung (31) ein durch die druckfeste Wandung (2) hindurch verlaufendes Rohr (16) ist, das gegenüber dem Druckraum (8) durch eine druckfeste, mikrowellendurchlässige Kappe (18) verschlossen ist.

9. Autoklav nach Anspruch 8, **dadurch gekennzeichnet, dass** die Kappe aus Aluminiumoxid, Kalziumkarbonat oder Quarzglas ausgebildet ist.

10. Autoklav nach Anspruch 8 oder 9, **dadurch gekennzeichnet, dass** über der Kappe (18) eine Schutzkappe aus mikrowellendurchlässigem schlagzähen Material angeordnet ist.

11. Autoklav nach einem der Ansprüche 8 bis 10, **dadurch gekennzeichnet, dass** die Koaxialleitung (31) durch ein am Innenumfang des Druckbehälters (15) angeordnetes Luftleit- und/oder Mikrowellenreflektorblech (20) hindurch reicht, das auf dem Rohr (16) gelagert ist.

12. Autoklav nach einem der Ansprüche 1 bis 11, **dadurch gekennzeichnet, dass** der Druckbehälter (15) für eine Dauerbelastung von 15 bar ausgelegt ist.

13. Autoklav nach einem der Ansprüche 1 bis 12, **dadurch gekennzeichnet, dass** der Druckraum (8) in dem Druckbehälter (15) durch luftdurchlässige, elektromagnetische Abschirmungen in einzelne Mikrowellenzonen unterteilt ist.

## Claims

1. An autoclave for pressure and temperature treatment of objects, particularly for producing fiber compound parts, comprising a pressure container enclosing a pressure chamber for receiving the objects to be treated and having a pressure resistant wall, and a heat source for heating the objects arranged in the pressure chamber, a free inner diameter of the pressure chamber being at least 1.5 m, and the heat source having a plurality of microwave sources arranged outside the pressure container, which are distributed over the pressure resistant wall, microwave radiation irradiated by the microwave sources being coupled through the pressure resistant wall into the pressure chamber, **characterized in that** an areal density of the microwave sources (29) over the pressure resistant wall (2) is at least 4/m².

2. The autoclave of claim 1, **characterized in that** the areal density of the microwave sources (29) over the pressure resistant wall (2) is at least 8/m².

3. The autoclave according to any of the claims 1 and 2, **characterized in that** the microwave sources (29) are evenly distributed over the area of the pressure resistant wall (2) at least outside a lower area of the microwave autoclave (1).

4. The autoclave according to any of the claims 1 to 3, **characterized in that** the heat source, besides the microwave sources (29), comprises a hot air source, a pressure build-up in the pressure chamber (8) being effected by increasing a temperature of the gas enclosed in the pressure chamber (8) by means of the hot air source.

5. The autoclave according to any of the claims 1 to 4, **characterized in that** the heat source has at least one microwave source (29) in form of a magnetron.

6. The autoclave according to any of the claims 1 to 5, **characterized in that** the heat source has at least one microwave source (29) which irradiates microwave radiation of a frequency from 300 MHz to 30 GHz, particularly of 0.913, 2.45 or 5.8 GHz.

7. The autoclave according to any of the claims 1 to 6, **characterized in that** microwave radiation irradiated by each microwave sources (29) arranged outside the pressure container (15) is coupled into a coaxial wave guide (31) extending through the pressure resistant wall (2).

8. The autoclave according to claim 7, **characterized in that** the outer guiding element of the coaxial wave guide (31) is a tube (16) extending through the pressure resistant wall (2), which is closed towards the pressure chamber (8) by means of a pressure resistant, microwave permeable cap (18).

9. The autoclave according to claim 8, **characterized in that** the cap is made of alumina, calcium carbonate or silica glass.

10. The autoclave according to claim 8 or 9, **characterized in that** a protective cover made of microwave permeable, impact resistant material is arranged over the cap (18).

11. The autoclave according to any of the claims 8 to 10, **characterized in that** the coaxial wave guide (31) extends through an air guiding and/or microwave reflecting sheet (20) arranged at the inner circumference of the pressure container (15), which is supported on the tube (16).

12. The autoclave according to any of the claims 1 to 11, **characterized in that** the pressure container (15) is designed for a permanent load of 15 bar.

13. The autoclave according to any of the claims 1 to 12, **characterized in that** the pressure chamber (8) in the pressure container (15) is subdivided into individual microwave zones by means of air permeable, electro-magnetic shields.

## Revendications

1. Autoclave pour le traitement sous pression et le traitement thermique des objets, en particulier pour la fabrication d'éléments préfabriqués renforcés par des fibres, avec un réservoir sous pression entourant une chambre sous pression pour recevoir les objets et présentant une paroi résistante à la pression, et avec une source de chauffage pour réchauffer les objets disposés dans la chambre sous pression, dans lequel un diamètre intérieur libre de la chambre sous pression mesurant au moins 1,5 m, et dans lequel la source de chauffage présente une pluralité de sources de micro-ondes disposées en dehors du réservoir sous pression et qui sont disposées en étant réparties sur la surface de la paroi résistante à la pression du réservoir sous pression, dans lequel un rayonnement micro-onde dégagé par les sources de micro-ondes est injecté dans la chambre sous pression à travers la paroi résistante à la pression, **caractérisé en ce qu'**une densité superficielle des sources de micro-ondes (29) au-dessus de la paroi résistante à la pression (2) est égale ou supérieure à 4/m².

2. Autoclave selon les revendications 1, **caractérisé en ce que** la densité superficielle des sources de micro-ondes (29) au-dessus de la paroi résistante à la pression (2) est supérieure ou égale à 8/m².

3. Autoclave selon l'une quelconque des revendications 1 et 2, **caractérisé en ce que** les sources de micro-ondes (29) sont réparties de façon homogène sur la surface de la paroi résistante à la pression (2) au moins jusqu'à une zone inférieure de l'autoclave à micro-ondes (1).

4. Autoclave selon l'une quelconque des revendications 1 à 3, **caractérisé en ce que** la source de chauffage présente en plus des sources de micro-ondes (29) une source de gaz chaud, la montée en pression dans la chambre sous pression (8) étant effectuée par une augmentation de température du gaz enfermé dans la chambre sous pression (8) par la source de gaz chaud.

5. Autoclave selon l'une quelconque des revendications 1 à 4, **caractérisé en ce que** la source de chauffage présente au moins une source de micro-ondes (29) sous la forme d'un magnétron.

6. Autoclave selon l'une quelconque des revendications 1 à 5, **caractérisé en ce que** la source de chauffage présente au moins une source de micro-ondes (29) qui dégage un rayonnement micro-onde d'une fréquence de 30 MHz à 30 GHz, en particulier de 0,913, 2,45 ou 5,8 GHz.

7. Autoclave selon l'une quelconque des revendications 1 à 6, **caractérisé en ce que** le rayonnement micro-onde dégagé par chacune source de micro-ondes (29) disposée en dehors du réservoir sous pression (15) est injecté dans une conduite coaxiale (31) passant à travers la paroi résistante à la pression (2).

8. Autoclave selon la revendication 7, **caractérisé en ce que** l'élément de conduite extérieur de la conduite coaxiale (31) est un tuyau (16) s'étendant à travers la paroi résistante à la pression (2), ledit tuyau étant fermé par rapport à la chambre sous pression (8) par un capuchon (18) résistant à la pression et perméable aux micro-ondes.

9. Autoclave selon la revendication 8, **caractérisé en ce que** le capuchon est réalisé en oxyde d'aluminium, en carbonate de calcium ou en verre de quartz.

10. Autoclave selon les revendications 8 ou 9, **caractérisé en ce qu'**un capuchon de protection d'un matériau résilient, perméable aux micro-ondes, est disposé au-dessus du capuchon (18).

11. Autoclave selon l'une quelconque des revendications 8 à 10, **caractérisé en ce que** la conduite coaxiale (31) passe à travers un déflecteur d'air et/ou réflecteur de micro-ondes (20), disposé sur la circonférence intérieure du réservoir sous pression (15) et qui est logé sur le tuyau (16).

12. Autoclave selon l'une quelconque des revendications 1 à 11, **caractérisé en ce que** le réservoir sous pression (15) est conçu pour une charge permanente de 15 bars.

13. Autoclave selon l'une quelconque des revendications 1 à 12, **caractérisé en ce que** la chambre sous pression (8) dans le réservoir sous pression (15) est divisée en zones micro-onde individuelles par des écrans électromagnétiques perméables à l'air.
